# EUROPEAN PATENT APPLICATION

(11) **EP 4 757 305 A1**
(43) Date of publication of application: **10.06.2026**
(21) Application number: 25219936.9
(22) Date of filing: 02.12.2025
(51) Int. Cl.: H04N 7/15, G06Q 10/10

(54) **METHOD FOR CONTROLLING HARDWARE EQUIPMENT BASED ON REAL-TIME ATMOSPHERE INFORMATION, ELECTRONIC APPARATUS AND COMPUTER-READABLE RECORDING MEDIUM**

(30) Priority: 09.12.2024 US 202463729475 P; 12.03.2025 TW 114109221
(71) Applicant: AmTRAN Technology Co., Ltd., New Taipei City 235038 (TW)
(72) Inventor: TENG, Yu-Hung, 235038 New Taipei City (TW); HO, Li-Yang, 235038 New Taipei City (TW); TENG, Chih-Chung, 235038 New Taipei City (TW)
(74) Representative: Becker, Eberhard

(57) **Abstract**

A method for controlling a hardware equipment in an actual space based on real-time atmosphere information, an electronic apparatus, and a computer-readable recording medium are provided. The method includes: collecting at least one real-time environmental information (D1, D2) in the actual space; analyzing the at least one real-time environmental information (D1, D2) and obtaining real-time emotional information of persons in the actual space, wherein the real-time emotional information includes types of emotional appearances of the persons; counting the types of emotional appearances of the plurality of persons to obtain a plurality of statistical parameters of real-time emotions; inputting the statistical parameters of the real-time emotions into a deep learning model (123) to determine real-time atmosphere status in the actual space; determining the hardware equipment corresponding to the real-time atmosphere status in the actual space; and generating a signal to control the hardware equipment corresponding to the real-time atmosphere status.

## Description

### BACKGROUND OF THE INVENTION

### Field of the Invention

The invention relates to an automatic control mechanism, and more particularly to a method for controlling surroundings, an electronic apparatus, and a computer-readable recording medium.

### Description of Related Art

Conventional video conferencing systems mainly focus on the transmission quality of images and sounds, and pay less attention to factors such as meeting atmosphere and the emotions of participants. The current "atmosphere" is very important for whether the meeting goes smoothly. During business negotiations, users may understand whether the negotiation rhythm is smooth by observing the meeting atmosphere and make business decisions accordingly. Whether the atmosphere is harmonious may be determined by observing the external expressions of the participants (such as facial expressions, gestures, body posture, intonation, wording, etc.). Therefore, in the field of video conferencing systems, how to improve meeting efficiency and participant experience is the direction that the industry continues to work towards.

### SUMMARY OF THE INVENTION

The invention provides a method for controlling surroundings, an electronic apparatus, and a computer-readable recording medium that quantify the atmospheric status and provide an auxiliary function to change the current physical surroundings when needed to alleviate the atmosphere.

A method for controlling a hardware equipment in an actual space based on real-time atmosphere information includes: collecting at least one real-time environmental information in the actual space; analyzing the at least one real-time environmental information and obtaining real-time emotional information of a plurality of persons in the actual space, wherein the real-time emotional information includes types of emotional appearances of the plurality of persons; counting the types of emotional appearances of the lurality of persons to obtain a plurality of statistical parameters of real-time emotions; inputting the statistical parameters of the real-time emotions into a deep learning model to determine real-time atmosphere status in the actual space; determining the hardware equipment corresponding to the real-time atmosphere status in the actual space; and generating a signal to control the hardware equipment corresponding to the real-time atmosphere status.

An electronic apparatus of the invention includes: a storage including a deep learning model; and a processor coupled to the storage. The processor is configured to execute the method for controlling the hardware equipment in the actual space based on the real-time atmosphere information.

A non-transitory computer-readable recording medium of the invention records a program, and the program is executed by a processor in the electronic apparatus to execute the method for controlling the hardware equipment in the actual space based on the real-time atmosphere information.

Based on the above, in the invention, the external performance of meeting participants is analyzed by a tool, the external behavioral data is quantified, the atmosphere status is determined using the trained deep learning model, and the auxiliary function is provided to change the current physical surroundings when needed to stabilize the meeting process in the direction of the atmosphere desired by the host. Accordingly, the atmosphere status of the meeting may be detected in real-time by analysis of the real-time environmental information, and suggestions may be provided or the meeting surroundings may be automatically adjusted according to the analysis results to improve the meeting effect. The invention solves the issue that traditional conference systems may not grasp the conference atmosphere in a timely manner, and optimizes the progress of the meeting by artificial intelligence learning.

### BRIEF DESCRIPTION OF THE DRAWINGS

FIG. 1 is a block diagram of an electronic apparatus according to an embodiment of the invention.
FIG. 2 is a flowchart of a method for controlling a hardware equipment in an actual space based on real-time atmosphere information according to an embodiment of the invention.
FIG. 3 is a schematic diagram illustrating a process of obtaining various parameters according to an embodiment of the invention.
FIG. 4 is a block diagram of an electronic apparatus and a controller according to an embodiment of the invention.
FIG. 5 is a schematic diagram of a statistical chart according to an embodiment of the invention.

### DESCRIPTION OF THE EMBODIMENTS

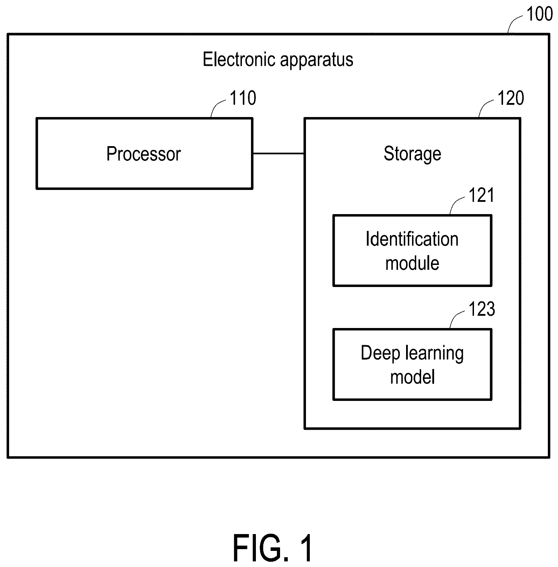

FIG. 1 is a block diagram of an electronic apparatus according to an embodiment of the invention. Referring to FIG. 1, an electronic apparatus 100 includes a processor 110 and a storage 120. The processor 110 is coupled to the storage 120. The storage 120 includes a plurality of identification modules 121 (121_1 to 121_N) and a deep learning model 123.

The processor 110 may be implemented using a central processing unit (CPU), a physical processing unit (PPU), a graphics processing unit (GPU), a programmable microprocessor, an embedded control chip, a digital signal processor (DSP), an application-specific integrated circuit (ASIC), or other similar apparatuses.

The storage 120 may be implemented using any type of fixed or removable random-access memory (RAM), read-only memory (ROM), flash memory, hard drive, or other similar apparatuses, or a combination of the apparatuses. The storage 120 includes one or a plurality of program code segments. After being installed, the one or a plurality of program code segments are executed by the processor 110 to implement each step of the method for controlling the hardware equipment in the actual space based on real-time atmosphere information described below.

In an embodiment, the processor 110 and the storage 120 may also be integrated into a system on a chip (SOC) having a neural-network processing unit (NNPU).

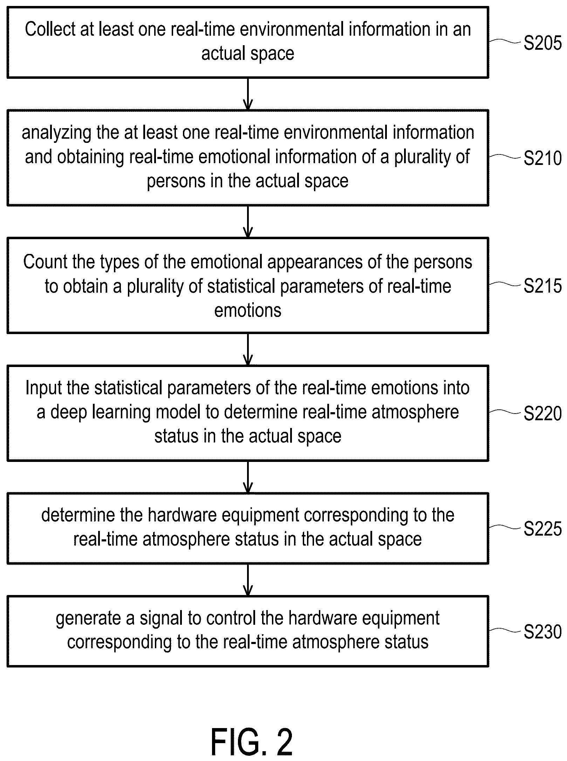

FIG. 2 is a flowchart of a method for controlling a hardware equipment in an actual space based on real-time atmosphere information according to an embodiment of the invention. Referring to FIG. 2, in step S205, at least one real-time environmental information in the actual space is collected. In an embodiment, the real-time environmental information includes real-time audio data and/or real-time video data. For example, an image capture device and an audio capture device are used to respectively obtain a plurality of real-time video data and real-time audio data related to the actual space (conference site).

In an embodiment, the image capture device and the audio capture device may be built into the electronic apparatus 100. In another embodiment, the image capture device and the audio capture device may also be disposed in the actual space externally and connected to the electronic apparatus 100 by wired or wireless means. One or a plurality of image capture devices may be disposed in the actual space, and one or a plurality of audio capture devices may also be disposed.

The image capture device may be a camera using a charge coupled device (CCD) lens, a complementary metal oxide semiconductor (CMOS) lens, or the like. In an embodiment, the image capture device 130 is formed by one or a plurality of cameras, for example. The audio capture device is, for example, a microphone or microphones.

Next, in step S210, the at least one real-time environmental information is analyzed and real-time emotional information of a plurality of persons in the actual space is obtained. Here, the real-time emotional information includes types of emotional appearances of the plurality of persons. In an embodiment, the real-time environmental information may be analyzed by the identification module 121 to obtain the real-time emotional information of the plurality of persons. In terms of the real-time environmental information including real-time audio data and real-time video data, the real-time audio data and the real-time video data are analyzed to obtain a plurality of state parameters and a plurality of voice parameters, and the emotional appearances of the plurality of persons are determined based on the plurality of state parameters and the plurality of voice parameters. The state parameters include facial expression parameters, gesture parameters, and body posture parameters. The voice parameters include intonation parameters, keyword information, and volume parameters. For example, the real-time audio data is analyzed by the identification module 121 to obtain the intonation parameters, the keyword information, and the volume parameters. Furthermore, the real-time video data is analyzed by the identification module 121 to obtain the facial expression parameters, the gesture parameters, and the body posture parameters. The emotional appearances of the persons in the actual space are determined based on the plurality of state parameters and the plurality of voice parameters.

An embodiment is given below to illustrate the process of obtaining the real-time emotional information.

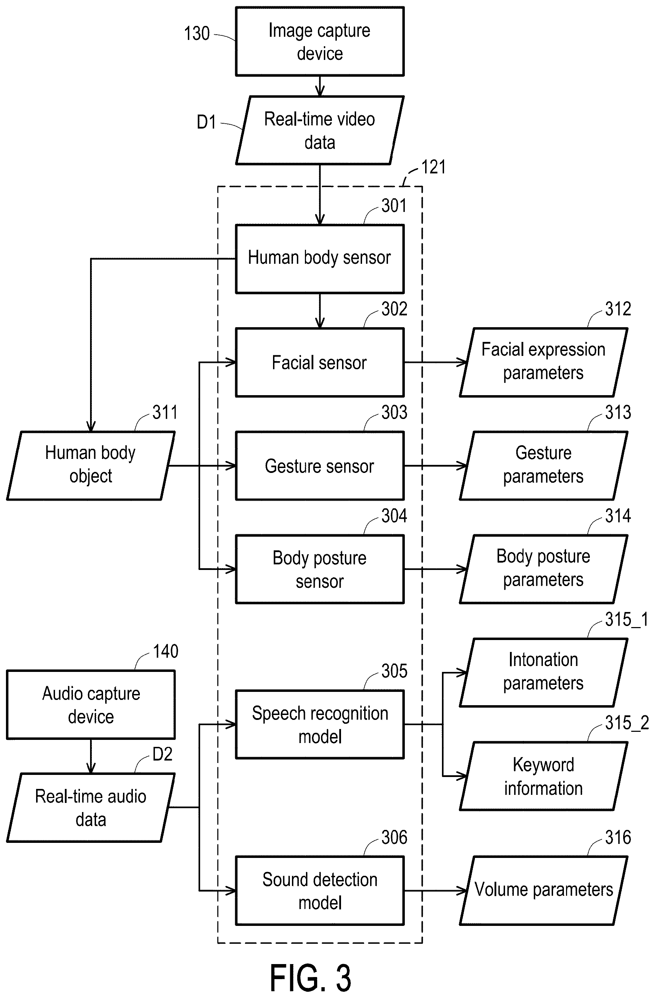

FIG. 3 is a schematic diagram illustrating a process of obtaining various parameters according to an embodiment of the invention. In the present embodiment, real-time video data D1 is acquired from the image capture device 130, and real-time audio data D2 is acquired from the audio capture device 140. The identification module 120 includes a human body sensor 301, a facial sensor 302, a gesture sensor 303, a body posture sensor 304, a speech recognition model 305, and a sound detection model 306.

The human body sensor 301 executes an object detection algorithm to detect all human body objects 311 included in the real-time video data D1, thereby calculating the number of persons in the actual space. The facial sensor 302 identifies facial region corresponding to each human body object 311 respectively, obtains facial features in the facial regions, and further obtains facial expression parameters 312 corresponding to the facial features. The facial sensor 302 may identify the facial expressions corresponding to the facial regions according to the facial features, such as a neutral face, a smiling face, etc. Therefore, whether a person is not interested in current topic may be detected by the facial sensor 302. For example, a facial region may be detected to determine whether the person corresponding to the facial region has eyes closed, dull eyes, rolled eyes, dozed off, yawned, etc.

The gesture sensor 303 identifies the hand region corresponding to each human body object 311 respectively included in the real-time video data D1 and analyzes the hand regions to obtain corresponding gesture parameters 313. The body posture sensor 304 identifies body region corresponding to each human body object 311 respectively included in the real-time video data D1 and analyzes the body regions to obtain corresponding body posture parameters 314.

The speech recognition model 305 executes a speech-to-text algorithm to analyze the real-time audio data D2, thereby obtaining intonation parameters 315_1 and keyword information 315_2. The intonation parameters 315_1 may include, for example, parameters indicating neutral intonation, happy intonation, angry intonation, sad intonation, afraid intonation, surprised intonation, or disgusted intonation.

The sound detection model 306 analyzes the real-time audio data D2 to obtain volume parameters 316. The volume unit of the volume parameters 316 may be decibel (dB). The analysis of the real-time audio data D2 herein adopts whole-field sound detections rather than limited to detect only one participant.

In an embodiment, the number of persons in the actual space is counted by the human body sensor 301, and then statistical tables are created corresponding to persons in the actual space by time (e.g., at time t0, t1, t2,..., tn), which record statistics of states, such as the emotional appearances, from persons in the actual space , as shown in Table 1.

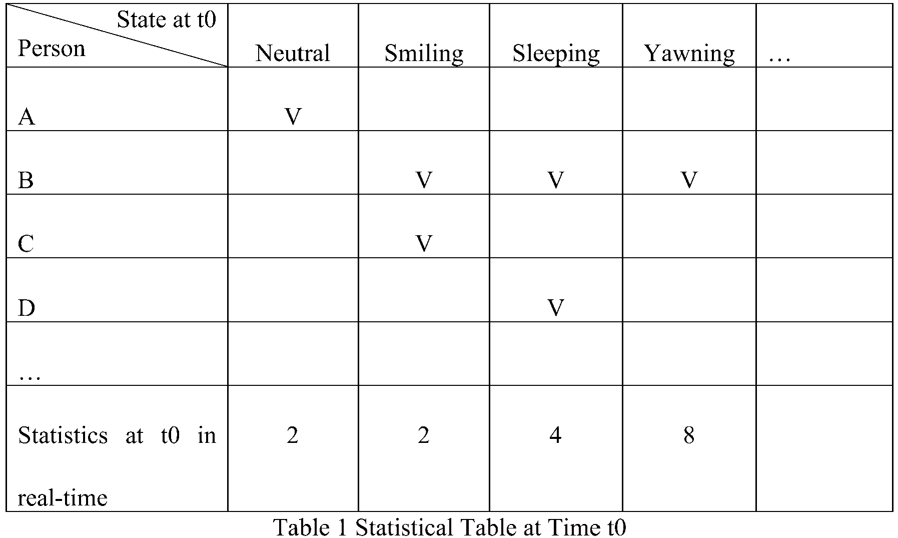

Referring back to FIG. 2, in step S215, the types of the emotional appearances of the persons are counted to obtain a plurality of statistical parameters of real-time emotions. The statistical parameters may include sleepiness ratio, yawning ratio, using mobile phone ratio, writing ratio, whispering ratio, eating ratio, drinking water ratio, clapping ratio, and etc. For example, the processor 110 calculates the sleepiness ratio and the yawning ratio based on the number of persons and the facial expression parameters 312. In addition, the processor 110 determines whether each person is using a mobile phone, whispering, eating, drinking water, clapping, or etc., based on the gesture parameters 313 and the body posture parameters 314, and accordingly calculates the using mobile phone ratio, the writing ratio, the whispering ratio, the eating ratio, the drinking water ratio, the clapping ratio, and etc. Moreover, the processor 110 may also determine whether each person exhibits dangerous actions, such as provocation, throwing an object, damaging equipment, or etc., based on the body posture parameters 314.

Subsequently, in step S220, the statistical parameters of the real-time emotions are input into the deep learning model 123 to determine real-time atmosphere status in the actual space. The atmosphere status may indicate the present status of the persons in the actual space, such as bored, the speaker speaking too fast, hungry, intense, disputing, or fighting.

In addition, in other embodiments, the atmosphere status may also be determined based on whether the sleepiness ratio, the yawning ratio, the using mobile phone ratio, the writing ratio, the whispering ratio, or the volume parameters exceed specified threshold, in combination with the detected intonation parameters, analysis results of sound detections, and etc.

For example, in the case that current sleepiness ratio ≥10%, yawning ratio ≥10%, using mobile phone ratio ≥10%, and volume <40 dB, the atmosphere status may be determined as the persons in the actual space being bored. In the case that current writing ratio ≥20%, whispering ratio ≥20%, and volume <40 dB, the atmosphere status may be determined as the speaker speaking too fast. In the case that current eating ratio ≥10% and drinking ratio ≥10%, the atmosphere status may be determined as the persons in the actual space being hungry. In the case that current volume ≥70 dB, intonation parameters 315_1 indicate an angry intonation, and keyword information 315_2 includes an inappropriate keyword, the atmosphere status may be determined as the persons in the actual space being intense.

For another example, in the case that current volume ≥90 dB, detected ratio of fearful facial expressions ≥10%, intonation parameters 315_1 indicate fearful intonation, and the keyword information 315_2 indicates two or more inappropriate keywords, the atmosphere status may be determined as the persons in the actual space being disputing.

In addition, in the case that current volume ≥90 dB, the sound of something being thrown or the sound of something being broken is identified in the real-time audio data, the intonation parameters 315_1 indicates an angry intonation, and the keyword information 315_2 includes two or more inappropriate keywords, the atmosphere status may be determined as the persons in the actual space being fighting.

The sampling duration of the real-time video data and the real-time audio data may be dynamically adjusted by the user settings according to the actual situations. In general, the more urgent the situations (such as intense, explosive, or etc.) are, the shorter the sampling durations are, so that the effect may be more significant and immediate.

In an embodiment, the processor 110 adopts moving average with periods of time to analyze statistics of detected parameters during the meeting. Specifically, the processor 110 continuously collects data from the past, for example, 5 minutes, and classifies the atmosphere status according to the collected data. As time goes by, the sampling time points shift accordingly, ensuring the classification results always reflect the latest meeting status.

In another embodiment, the processor 110 may also adjust sampling duration to different lengths according to the intensity of the atmosphere. For example, for an ordinary atmosphere changes, sampling duration of 5 minutes may be adopted, and for relatively intense atmosphere changes, sampling duration of 1 minute may be adopted. In addition, for sudden emergency situations, sampling duration of 30 seconds or 10 seconds may be adopted. Such dynamical adjustments strategy of sampling may more flexibly correspond to various meeting situations.

Next, in step S225, the hardware equipment corresponding to the real-time atmosphere status in the actual space is determined. And in step S230, a signal to control the hardware equipment corresponding to the real-time atmosphere status is generated. For example, the processor may collect all hardware equipment in the actual space, determine any of the hardware equipment corresponding to the real-time atmosphere status, and send the control signal to the hardware equipment corresponding to the real-time atmosphere status, causing the hardware equipment to operate correspondingly. That is, in the case that the real-time atmosphere status does not meet expectations during a meeting, the processor 110 may directly control the corresponding hardware equipment to operate for changing the meeting atmosphere, or notify the host to make a corresponding environmental adjustment. For example, a reminder may be displayed on the display screen for the host to call a break, slow down the speaking speed, or change current topic. Alternatively, the processor 110 may drive a corresponding controller to automatically adjust the air-conditioning temperature, adjust the output volume of the loudspeakers, or activate the aroma diffuser, among other functions.

In an embodiment, when unexpected atmosphere status occurs, the processor 110 may notify the conference host by a voice message, a text message, or a multimedia message to make corresponding changes to the environment. For example, the changes may include changing the lighting mode, adjusting the panel color temperature, adjusting the background music, adjusting external light incoming from the window, or changing the air conditioning temperature of the conference room. Alternatively, the processor 110 may automatically transmit control signals to the controllers which control the corresponding hardware equipment disposed in the actual space to operate.

For example, when the atmosphere status is determined as the persons in the actual space being bored, a reminder to the host may be displayed on the display to call a break or change current topic. When the atmosphere status is determined as the speaker speaking too fast, a reminder may be displayed on the display to slow down the speech speed. When the atmosphere status is determined as the persons in the actual space being hungry, a reminder may be displayed on the display to call a break.

When the atmosphere status is determined as the persons in the actual space being intense, a reminder may be displayed on the display to call a break, simultaneously the color temperature of the light sources may be increased (for example, to 6500 K) and the air conditioning temperature may be lowered (for example, 20 °C).

When the atmosphere status is determined as the persons in the actual space being disputing, a reminder may be displayed on the display, the color temperature of the light source may be increased (for example, to 6500 K), the air conditioning temperature may be lowered (for example, 18 °C), and the aroma diffuser may be driven to execute smooth spray which calms the emotions of the persons on site.

When the atmosphere status is determined as the persons in the actual space being fighting, a reminder may be displayed on the display to stop the meeting and notify security personnel, and simultaneously the output volume of the loudspeakers is lowered.

In addition, the processor 110 may also use the speech recognition model 305 to analyze the real-time audio data D2 and determine whether any preset keywords (for ex, obscene or profanity words) is included. The loudspeakers may be muted when the real-time audio data D2 is determined as including any preset keywords. In addition, fine adjustments to the light source, the air conditioning, and other devices may be made to ease the atmosphere.

Moreover, when the volume parameters 316 detected by the sound detection model 306 exceed a specific decibel value, a voice message, text message, or multimedia message may be provided to notify the conference host to take measures to ease the atmosphere. The sound detection model 306 may further detect specific sounds from the real-time audio data D2. The specific sounds may be, for example, the sound of clapping a table, throwing an object, dropping an object, and etc.

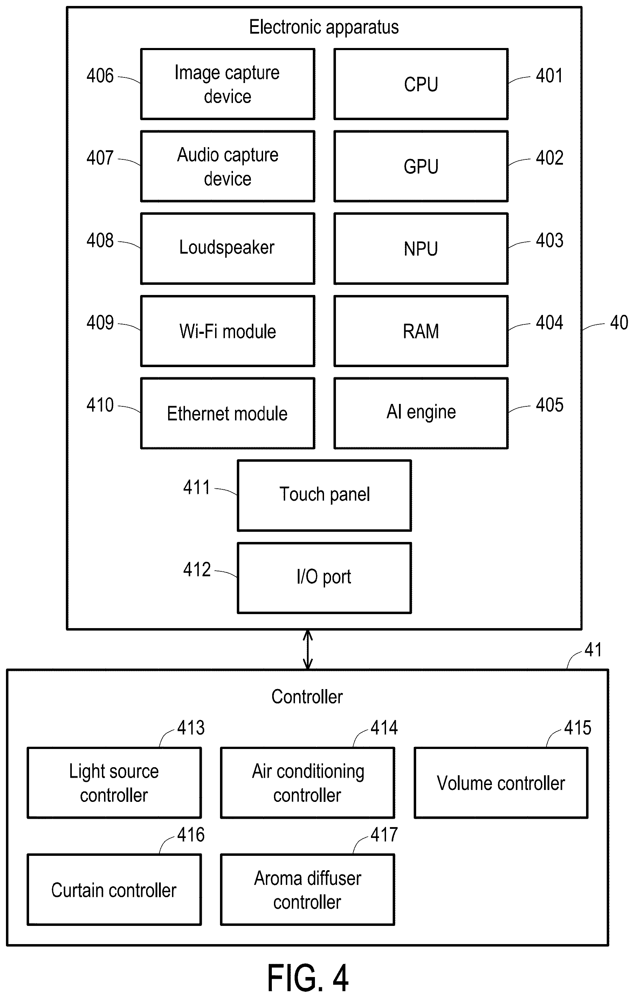

FIG. 4 is a block diagram of an electronic apparatus and a controller according to an embodiment of the invention. FIG. 4 is only an example and is not intended to limit the scope of the invention. Referring to FIG. 4, an electronic apparatus 40 includes a CPU 401, a GPU 402, a network processing unit (NPU) 403, a RAM 404, an artificial intelligence (AI) engine 405, an image capture device 406, an audio capture device 407, a loudspeaker 408, a Wi-Fi module 409, an Ethernet module 410, a touch panel 411, and an input/output port 412. The controller 41 includes a light source controller 413, an air conditioning controller 414, a volume controller 415, a curtain controller 416, and an aroma diffuser controller 417. The electronic apparatus 40 is connected to the controller 41 by the input/output port 412.

The CPU 401 is responsible for executing various computational tasks. The GPU 402 is used for training deep learning models. The NPU 403 is a processor designed specifically for AI applications, which is responsible for neural network computations, including inference, training, and etc. The AI engine 405 is capable of executing complex tasks, such as image recognition, natural language processing, predictive analysis, and autonomous decision-making.

The AI engine 405 adopts large language model (LLM) technology, such as LLaMA (Large Language Model Meta AI), to perform keyword queries in terms. In another embodiment, the AI engine 405 adopts a combination architecture of multi-layer convolutional neural network (CNN) and long short-term memory (LSTM). The CNN is used to process image data and extract visual features such as the expressions and the postures of the participants. The LSTM is used to process temporal data and capture the changing trend of meeting atmosphere over time. The architecture may simultaneously consider information of spatial and temporal dimensions, improving the accuracy of atmosphere classification.

The Internet of Things (IoT) technology may be implemented by the Wi-Fi module 409 and/or the Ethernet module 410, so that the controller 41 may be connected to various hardware equipment for real-time fine-adjustments in operations. For example, the light source controller 413 controls the light source, the air conditioning controller 414 controls the air conditioning, the volume controller 415 controls the loudspeaker 408, the curtain controller 416 controls the curtain motor, the aroma diffuser controller 417 controls the aroma diffuser, and etc.

In an embodiment, the deep learning model 120 may be pre-trained for pre-learning. For example, the training sample set is input into the identification module 121 to obtain a plurality of training parameters from the identification module, and the training parameters are used for deep learning of the deep learning model. The training sample set includes training video data and training audio data. The training video data and the training audio data are input to the identification module 121, and a plurality of training parameters are obtained from the identification module 121. The training parameters are used for deep learning of the deep learning model 123, thereby obtaining the trained deep learning model 123. The plurality of training parameters include comprehensive reactions of human (e.g. the changes in facial expressions, gestures, and body postures, etc.) in training video data of the training sample set and voice parameters in training audio data of the training sample set.

In an embodiment, the identification module 121 and the deep learning model 123 adopt a multi-layer deep learning network architecture. Each functional module, such as data analysis, parameter collection, atmosphere classification, and etc, is managed by an independent deep learning network. These deep learning networks form a hierarchical structure, in which the outputs of the lower-level networks serve as the inputs of the higher-level networks, thus achieving the end-to-end artificial intelligence processing from raw data to final atmosphere determination.

In addition, the deep learning model 123 is capable of self-learning and optimization. By continuously collecting meeting data and human feedback, the deep learning model 123 may continuously improve the atmosphere detection and the control strategies thereof, making them more accurate and effective.

In an embodiment, the identification module 121 analyzes the training video data to perform head counting, identifies all persons in the training video data applying facial recognition, and assigns identification numbers to the identified persons, wherein repeatedly appearing person may be combined under same single identification number. In addition, the identification module 121 may also calculate the changes in facial expressions, gestures, and body postures (i.e. comprehensive reactions) of each person in the training video data, which are used as the training parameters (state parameters). In addition, the identification module 121 analyzes the training audio data to obtain the intonations, the volumes, and other characteristics of current situation, which are also used as the training parameters (voice parameters). The training parameters are then input into the deep learning model 123 for deep learning, thereby obtaining the trained deep learning model 123.

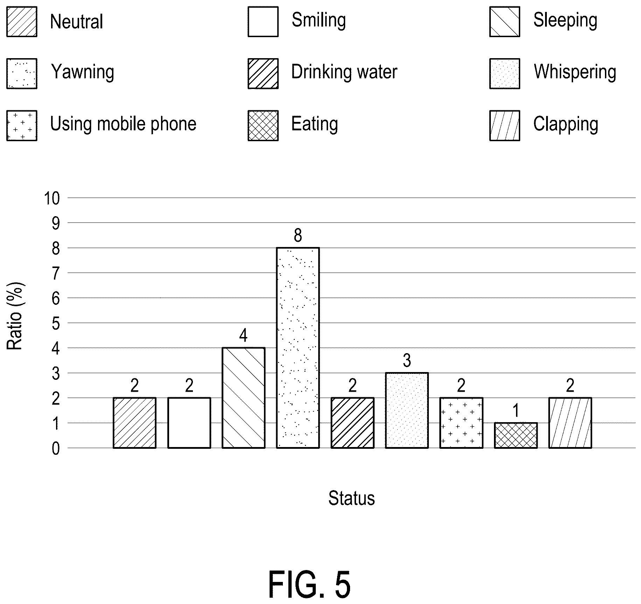

FIG. 5 is a schematic diagram of a statistical chart according to an embodiment of the invention. In the present embodiment, statistics of the on-site persons are collected to determine the objective counts of reactions from the persons, and a statistical chart is generated and displayed on the display for the host's reference. As shown in FIG. 5, a bar chart is used to show the distribution ratios of various person states, such as neutral (no expression), smiling, sleeping, yawning, drinking water, whispering, using a mobile phone, eating, clapping, and other states. The X-axis represents various person states, and the Y-axis represents the ratio of a certain person state to all participants. This statistical chart may be updated in real-time and provided to the meeting host with an intuitive overview of the atmosphere.

In addition, the embodiments may also be integrated with other AI office application systems. For example, an AI calendar management system may be integrated, which automatically adjusts meeting durations or arranges breaks of the meeting according to the atmosphere and the progress in real-time. An AI note-taking system may also be integrated, which automatically highlights or summarizes important discussion points when detected.

Although the above embodiments mainly discuss applications in conference scenarios, the technical solution of the present invention is also applicable to other scenarios which require atmosphere monitoring and adjustments correspondingly, such as classroom teaching, team collaboration, customer service, etc. In addition, although the above embodiments mainly discuss atmosphere analysis based on video and audio information, the technical solution of the present invention may also be extended to apply other perception modalities, such as collecting the physiological data (heart rate, skin conductance, or etc.) of the participants by wearable devices to assist in atmosphere determination.

The technical solution of the present invention may also be combined with virtual reality (VR) or augmented reality (AR) technologies to achieve richer atmosphere controls and interactive experiences in the virtual meeting rooms.

In summary, the present invention has atmosphere detection and surroundings adjustment functions, which may sense the atmosphere status in real-time, and control the hardware equipment to make corresponding adjustments, thus helping to improve the efficiency and the quality of meetings. The present invention may significantly improve the efficiency of meetings and the experiences of participants. With the continuous development of artificial intelligence and perception technologies, the application prospects of the present invention will become increasingly broad.

### [REFERENCE SIGNS LIST]

100, 40: electronic apparatus
110: processor
120: storage
121: identification module
123: deep learning model
130, 406: image capture device
140, 407: audio capture device
301: human body sensor
302: facial sensor
303: gesture sensor
304: body posture sensor
305: speech recognition model
306: sound detection model
311: human body object
312: facial expression parameters
313: gesture parameters
314: body posture parameters
315_1: intonation parameters
315_2: keyword information
316: volume parameters
41: controller
401: CPU
402: GPU
403: NPU
404: RAM
405: AI engine
408: loudspeaker
409: Wi-Fi module
410: Ethernet module
411: touch panel
412: input/output port
413: light source controller
414: air conditioning controller
415: volume controller
416: curtain controller
417: aroma diffuser controller
D1: real-time video data
D2: real-time audio data
S205-S230: step

## Claims

1. A control method for controlling a hardware equipment in an actual space based on real-time atmosphere information, comprising:
collecting (S205) at least one real-time environmental information (D1, D2) in the actual space;
analysing (S210) the at least one real-time environmental information (D1, D2) and obtaining real-time emotional information of a plurality of persons in the actual space, wherein the real-time emotional information includes types of emotional appearances of the plurality of persons;
counting (S215) the types of emotional appearances of the plurality of persons to obtain a plurality of statistical parameters of real-time emotions;
inputting (S220) the statistical parameters of the real-time emotions into a deep learning model (123) to determine real-time atmosphere status in the actual space;
determining (S225) the hardware equipment corresponding to the real-time atmosphere status in the actual space; and
generating (S230) a signal to control the hardware equipment corresponding to the real-time atmosphere status.

2. The method for controlling the hardware equipment in the actual space based on the real-time atmosphere information of claim 1, wherein the real-time environmental information (D1, D2) includes real-time audio data (D2) and real-time video data (D1), the real-time audio data (D2) and the real-time video data (D1) are analyzed to obtain a plurality of state parameters and a plurality of voice parameters, and the emotional appearances of the plurality of persons are determined based on the plurality of state parameters and the plurality of voice parameters.

3. The method for controlling the hardware equipment in the actual space based on the real-time atmosphere information of claim 2, wherein the plurality of voice parameters include intonation parameters (315_1), keyword information (315_2), and volume parameters (316).

4. The method for controlling the hardware equipment in the actual space based on the real-time atmosphere information of claim 2, wherein the state parameters include facial expression parameters (312), gesture parameters (313), and body posture parameters (314).

5. The method for controlling the hardware equipment in the actual space based on the real-time atmosphere information of any one of claims 1 to 4, further comprising: inputting a training sample set into an identification module (121) to obtain a plurality of training parameters from the identification module (121), and using the training parameters to perform deep learning on the deep learning model (123).

6. An electronic apparatus comprising:
a storage (120) comprising a deep learning model (123) and storing at least one program instruction; and
a processor (110) coupled to the storage (120), wherein when the processor (110) reads the program instruction, the processor (110) executes at least following steps:
collecting at least one real-time environmental information (D1, D2) in an actual space;
analyzing the at least one real-time environmental information (D1, D2) and obtaining real-time emotional information of a plurality of persons in the actual space, wherein the real-time emotional information includes types of emotional appearances of the plurality of persons;
counting the types of the emotional appearances of the plurality of persons to obtain a plurality of statistical parameters of real-time emotions;
inputting the statistical parameters of real-time emotions into the deep learning model (123) to determine real-time atmosphere status in the actual space; and
determine a hardware equipment corresponding to the real-time atmosphere status in the actual space; and
generate a signal to control the hardware equipment corresponding to the real-time atmosphere status.

7. The electronic apparatus of claim 6, wherein the at least one real-time environmental information (D1, D2) comprises real-time audio data (D2) and real-time video data (D1), the real-time audio data (D2) and the real-time video data (D1) are analyzed to obtain a plurality of state parameters and a plurality of voice parameters, and the emotional appearances of the plurality of persons are determined based on the plurality of state parameters and the plurality of voice parameters.

8. The electronic apparatus of claim 7, wherein the plurality of voice parameters include intonation parameters (315_1), keyword information (315_2), and volume parameters (316).

9. The electronic apparatus of claim 7, wherein the state parameters include facial expression parameters (312), gesture parameters (313), and body posture parameters (314).

10. The electronic apparatus of any one of claims 6 to 9, wherein the processor (110) further executes at least following steps:
inputting a training sample set into an identification module (121) to obtain a plurality of training parameters from the identification module (121), and using the training parameters to perform deep learning on the deep learning model (123).

11. A non-transitory computer-readable recording medium, recording at least one program instruction, wherein the program is executed by a processor (110) in an electronic apparatus to execute following steps:
collecting at least one real-time environmental information (D1, D2) in an actual space;
analyzing the at least one real-time environmental information (D1, D2) and obtaining real-time emotional information of a plurality of persons in the actual space, wherein the real-time emotional information includes types of emotional appearances of the plurality of persons;
counting the types of the emotional appearances of the plurality of persons to obtain a plurality of statistical parameters of real-time emotions;
inputting the statistical parameters of the real-time emotions into a deep learning model (123) to determine real-time atmosphere status in the actual space; and
determining a hardware equipment corresponding to the real-time atmosphere status in the actual space; and
generating a signal to control the hardware equipment corresponding to the real-time atmosphere status.

12. The non-transitory computer-readable recording medium of claim 11, wherein the real-time environmental information (D1, D2) comprises real-time audio data (D2) and real-time video data (D1), the real-time audio data (D2) and the real-time video data (D1) are analyzed to obtain a plurality of state parameters and a plurality of voice parameters, and the emotional appearances of the plurality of persons are determined based on the plurality of state parameters and the plurality of voice parameters.

13. The non-transitory computer-readable recording medium of claim 12, wherein the plurality of voice parameters include intonation parameters (315_1), keyword information (315_2), and volume parameters (316).

14. The non-transitory computer-readable recording medium of claim 12, wherein the state parameters include facial expression parameters (312), gesture parameters (313), and body posture parameters (314).

15. The non-transitory computer-readable recording medium of claim 11, wherein the program is executed by the processor (110) to further execute following steps:
inputting a training sample set into an identification module (121) to obtain a plurality of training parameters from the identification module (121), and using the training parameters to perform deep learning on the deep learning model (123).
